# EUROPEAN PATENT SPECIFICATION

(11) **EP 3 595 183 B1**
(45) Date of publication and mention of the grant of the patent: **06.07.2022**
(21) Application number: 18182477.2
(22) Date of filing: 09.07.2018
(51) Int. Cl.: H04B 3/32, H04L 5/00, H04L 5/14

(54) **JOINT-COORDINATION OF COMMUNICATION SIGNALS**
GEMEINSAME KOORDINATION VON KOMMUNIKATIONSSIGNALEN
COORDINATION CONJOINTE DE SIGNAUX DE COMMUNICATION

(43) Date of publication of application: 15.01.2020
(73) Proprietor: Nokia Solutions and Networks Oy, 02610 Espoo (FI)
(72) Inventor: Maes, Jochen, 2018 Antwerpen (BE); NUZMAN, Carl Jeremy, New York Murray Hill NJ 07974-0636 (US)
(74) Representative: IP HILLS NV

(56) References cited:
- EP-A1- 3 340 519
- EP-A1- 3 593 457

## Description

### Technical Field

Various example embodiments relate to the joint-coordination of communication signals exchanged between an access node and remote devices over respective communication lines.

### Background

Joint-coordination of communication signals is used for cross-talk mitigation in communication systems wherein an access node exchanges such communication signals with remote communication devices over respective communication lines. Different types of cross-talk exist depending on the disturber and the affected device such as downstream far end cross-task, FEXT, upstream far end cross-talk, FEXT, near end cross-talk, NEXT into the access node; and near end cross-talk, NEXT into the remote devices.

Communication systems may support multi-user full-duplex, FDX, communication wherein upstream and downstream communication is performed simultaneously in time and frequency. For mitigation of NEXT into the remote devices, a power control scheme may be used for the remote devices wherein increasing the transmit power of remote devices improves upstream performance in exchange of downstream performance, and vice versa. A time frame may then be subdivided into a first and second sub-frame wherein, during the first-time frame, downstream performance is prioritized, and, during the second time frame, upstream performance is prioritized.

An access node in a FDX communication system may further support both remote devices operating in FDX mode and remote device operating in a half-duplex time-division duplexing, TDD, mode. TDD downstream communication is then performed during the downstream prioritized first sub-frame and TDD upstream communication is then performed during the second upstream prioritized second sub-frame.

EP3340519A1 discloses a communication controller and method for controlling communications between an access node and a plurality of remote communication units coupled to the access node via at least one wired transmission medium. At least one communication unit of the access node and of the plurality of remote communication units is configured to operate in full-duplex mode according to a first full-duplex communication profile when using a first subset of transmission resources selected from a whole set of transmission resources available for communication over the at least one transmission medium, and according to a second full-duplex communication profile when using a second nonoverlapping subset of transmission resources selected from the whole set of transmission resources. The first full-duplex communication profile includes first downstream and upstream transmit power profiles to achieve first aggregate downstream and upstream data rates over the at least one transmission medium, and the second full-duplex communication profile includes second downstream and upstream transmit power profiles to achieve second aggregate downstream and upstream data rates over the at least one transmission medium distinct from the respective first aggregate downstream and upstream data rates.

### Summary

Amongst others, it is an object of embodiments to foresee in a solution for joint-coordination of communication signals in a communication system capable of such combined FDX and TDD operation.

This object is achieved, according to a first example aspect of the present disclosure, by a communication controller configured to control joint-coordination of communication signals exchanged between an access node and remote devices over respective communication lines; communications between the access node and the remote devices alternating between first time sub-frames and second time sub-frames; the first time sub-frames corresponding to full-duplex, FDX, downstream-priority sub-frames or to time-division duplexing, TDD, downstream sub-frames, and the second time sub-frames corresponding to FDX upstream-priority sub-frames or to TDD upstream sub-frames; wherein the communication controller is further configured to characterize first cross-talk channels into receivers of the remote devices during the first time sub-frames and to characterize second cross-talk channels into receivers of the access node during the second time sub-frames, and wherein the communication controller is further configured to control the joint-coordination of the communication signals exchanged between the access node and the remote devices during the first or second time-sub-frames based on the so-characterized first and second crosstalk channels.

In other words, the communication controller may determine the parameters or coefficients for cross-talk cancellation or mitigation based on channel characteristics obtained during the first or second time sub-frames dependent on the type of cross-talk, i.e., whether the cross-talk channel affects the access node or the remote devices. This results in different cross-talk channel characteristics than when all cross-talk channels are determined during either the first or second time sub-frames. This difference may be due to a change in impedance of remote devices between their operation during the first and second time-frame. More particular, it has been observed that remote devices operating in TDD mode may exhibit a different impedance between downstream and upstream operation and, thus, during the first and second time sub-frames.

As the communication controller only derives a respective cross-talk channel characteristic once, i.e., either during the first or second time sub-frames, the signal joint-coordination may be based on a single set of cross-talk cancellation parameters for that respective cross-talk channel during both time sub-frames. Furthermore, the cross-talk parameters will be optimized for the prioritized use case, i.e., for downstream or upstream communication. This way, cross-talk channels affecting downstream performance are characterized during a downstream prioritized sub-frame and cross-talk channels affecting upstream performance are characterized during an upstream prioritized sub-frame.

According to example embodiments, the first cross-talk channels comprise downstream far end cross-talk, FEXT, channels. The communication controller is then further configured to derive precoding coefficients from the characterized downstream FEXT channels for downstream FEXT pre-compensation of communication signals to be transmitted by the access node to the remote devices.

Downstream FEXT has a negative impact on downstream communication. The downstream FEXT channels are thus preferably characterized during a downstream prioritized sub-frame. As both FDX and TDD operated transceivers of the access node may transmit during the first time sub-frames and both FDX and TDD operated remote nodes may receive during the first time sub-frames, a complete characterization is obtainable during the first time sub-frames. As all downstream communication signals are needed for optimal downstream FEXT cancellation, the cancellation is further performed by a precoder, i.e. by pre-compensation for FEXT before signal transmission at the access node.

According to example embodiments, the second cross-talk channels comprise upstream far end cross-talk, FEXT, channels. The communication controller is then further configured to derive postcoding coefficients from the characterized upstream FEXT channels for upstream FEXT post-compensation of communication signals received by the access node.

Upstream FEXT has a negative impact on upstream communication. The upstream FEXT channels are thus preferably characterized during an upstream prioritized sub-frame. As both FDX and TDD operated transceivers of the access node may receive during the second time sub-frames and both FDX and TDD operated remote nodes may transmit during the second time sub-frames, a complete characterization is obtainable by the communication controller during this second time sub-frames. As all upstream communication signals are needed for optimal upstream FEXT cancellation, the cancellation is further performed by a postcoder, i.e. by post-compensation for FEXT after signal reception at the access node.

According to example embodiments, the second cross-talk channels comprise near end cross-talk, NEXT, channels into the receivers of the access node. The communication controller is then further configured to derive cancellation coefficients from the so-characterized NEXT channels for cancelation of NEXT from communication signals received by the receivers of the access node.

During the second time sub-frames, both TDD and FDX configured receivers in the access node are receiving communication signals while FDX configured transmitters in the access node are sending communication signals. Hence, the TDD and FDX configured receivers of the access node suffer from NEXT from the FDX configured transmitters of the access node. As the second time sub-frames are optimized towards upstream communication, the NEXT channel characteristics into the access node are determined during the second time sub-frames resulting in the most optimal NEXT cancellation at the access node during the second sub-frame.

Advantageously, the characterizing of this near end cross-talk, NEXT, channels into the receivers of the access node further comprises configuring the access node to transmit probing sequences onto communication lines operated in TDD mode during the second time sub-frames.

Communication lines operated in TDD mode will only perform upstream communication during the second time sub-frames. Therefore, when characterizing the NEXT channels into the receivers, the TDD configured transceivers of the access node would not be transmitting signals. Because the access node has a combined FDX and TDD operation mode, the transceivers in the access node may always transmit probing sequences onto the communication lines even when operating in TDD. It is thus an advantage that NEXT origination from the TDD operated transceivers can be characterized during the second time sub-frames, i.e., the sub-frames during which the access node is most strongly affected by NEXT into its receivers.

Alternatively, the characterizing of the near-end crosstalk, NEXT, channels into the FDX configured receivers of the access node from the TDD configured transmitters of the access node may be done during the first time sub-frames.

According to example embodiments, the first cross-talk channels comprise near end cross-talk, NEXT, channels from remote devices operating in FDX mode into the receivers of the remote devices; and wherein the communication controller is further configured to derive therefrom transmit power levels for transmitters of the remote devices operating in FDX mode.

During the first time sub-frames, the FDX remote devices are transmitting communication signals resulting in NEXT into both the FDX and TDD operated devices. As the first time sub-frames are optimized towards downstream communication, the NEXT channel characteristics from the FDX operated remote devices into the remote devices are determined during this first time sub-frames. From these NEXT channel characteristics, the most optimal transmit power levels can be obtained for the remote devices operating in FDX mode.

According to example embodiments, the communication controller is further configured to characterize near end cross-talk, NEXT, channels from remote devices operating in TDD mode into the receivers of the remote devices operating in FDX mode during the second time sub-frames, and to derive therefrom transmit power levels of transmitters of the remote devices operating in TDD mode.

Contrary to the transceivers of the access node, remote devices operating TDD mode may not support both TDD and FDX modes and, hence, NEXT originating from the TDD operated remote devices cannot be characterized during the first time sub-frames as they can only send signals during the second-time sub-frames. Therefore, NEXT originating from remote devices operating in TDD mode affecting remote devices operating in FDX mode during the second time sub-frames is characterized during the second time sub-frames.

According to example embodiments, the communication controller further comprises at least one processor and at least one memory including computer program code, the at least one memory and computer program code configured to, with the at least one processor, cause the performance of the controller.

According to example aspects, an access node is disclosed comprising at least one analogue front end configured to transmit and receive communication signals exchanged with remote devices over respective communication lines, and a signal processor to jointly coordinate the transmitting and receiving of the communication signals, wherein the signal processor is configured by the communication controller according to the above example embodiments.

According to example embodiments, the access node further comprises the communication controller.

Alternatively, the communication controller may be located more upstream in the access network, wherein the access node interoperates remotely with the communication controller.

According to further example aspects, a method is disclosed comprising:
- controlling joint-coordination of communication signals exchanged between an access node and remote devices over respective communication lines; communications between the access node and the remote devices alternating between first time sub-frames (FDS/HDS) and second time sub-frames (FUS/HUS); the first and second time sub-frames respectively corresponding to Full-duplex Downstream-priority Sub-frames (FDS) and Full-duplex Upstream-priority Sub-frames (FUS) when a communication line is operated in full-duplex, FDX, mode, and respectively corresponding to Downstream Sub-frames, (HDS), and Upstream Sub-frames, (HUS), when a communication line is operated in time division duplexing, TDD, mode;
- characterizing first cross-talk channels into receivers of the remote devices during the first time sub-frames;
- characterizing second cross-talk channels into receivers of the access node during the second time sub-frames,
- controlling the joint-coordination of the communication signals exchanged between the access node and the remote devices during the first or second time-sub-frames based on the so-characterized first and second crosstalk channels.

### Brief Description of the Drawings

Some example embodiments will now be described with reference to the accompanying drawings.
Fig. 1 shows an example embodiment of a communication system comprising an access node connected to a plurality of remote devices by respective communication lines; and
Fig. 2 illustrates an example embodiment of cross-talk channels between an access node and remote devices; and
Fig. 3A shows probing signals exchanged between an access node and remote devices during a first downstream priority sub-frame according to an example embodiment;
Fig. 3B shows probing signals exchanged between an access node and remote devices during a second upstream priority sub-frame according to an example embodiment;
Fig. 4 shows an example embodiment of a suitable computing system for performing one or several steps in embodiments of the invention.

### Detailed Description of Embodiment(s)

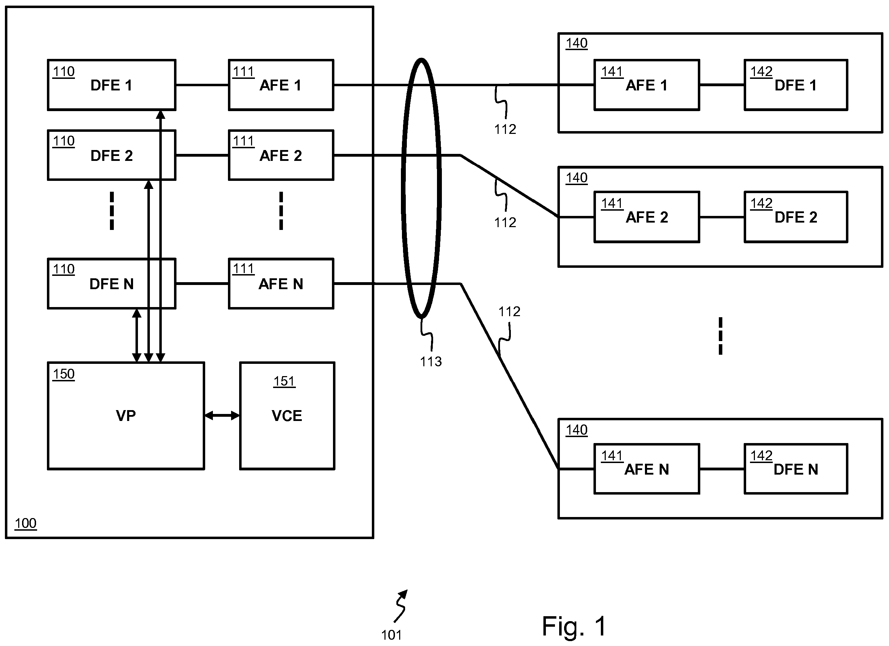

Fig. 1 illustrates an example embodiment of an access node 100 comprising a plurality of N digital front ends, DFEs 110, N analogue front ends 111, AFEs, a vectoring processor 150 and a vectoring control entity 151, further referred to as communication controller 151. Access 100 may be connected to N respective communication lines 112. At the other end, the communication lines 112 may be connected to respective remote nodes 140. A remote node 140 comprises a similar AFE 141 and DFE 142. A DFE 110 and 142 may comprise logic for discrete multi-tone modulation of digital payload data onto a multitude of K frequency carriers or tones and, vice versa, for discrete multi-tone demodulation of digital payload data from a multitude of K frequency carriers or tones. The frequency domain representation of data may also be referred to as tone data. A DFE 110 and 142 further comprises logic for converting tone data to time domain data, i.e. to symbols, and vice versa, for converting time domain data to tone data. A DFE 110 and 142 may be implemented on a digital signal processor, DSP. An AFE 111, 141 converts digitally represented time domain data to an analogue signal and transmits the analogue signal onto the respective transmission line 112. Vice versa, an AFE 111, 141, also converts an analogue signal received from a respective transmission line 112 to a digitally represented time domain signal, i.e. symbol. An AFE may also be referred to as a transceiver, as a transmitter when transmitting, and as a receiver when receiving. As both arrangement 100 and terminal nodes 140 comprises both transmission and reception logic, they are both said to be configured for bidirectional communication. Access node 100 may further be configured to perform multi-user full-duplex, FDX, communication with remote devices when those devices support such full-duplex communication, or to perform time-division duplexed, TDD, communication when the remote devices support TDD communication. Communication system 101 comprising access node 100, communication lines 112 and remote devices 140 may thus operate according to a mixture of FDX operated lines and TDD operated lines.

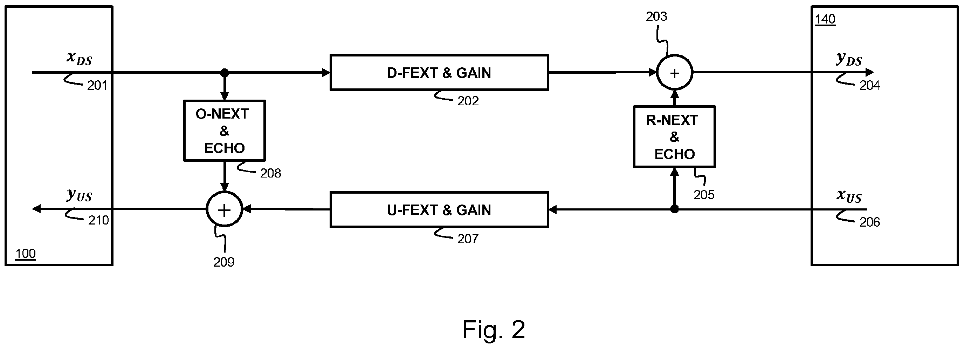

Because transmission lines 112 may exhibit cross-talk, for example because they are bundled together (113), signals may couple from one line onto another line thereby disturbing each other. Fig. 2 illustrates a frequency domain representation of the different cross-talk channels that may appear in communication system 100. Signal 201 is indicative for the downstream communication signals transmitted by transmitters 111 of the access node 100 towards the remote devices 140; signal 204 is indicative for the received signal 201 after having been affected by the different cross-talk channels. Similarly, for the upstream direction, signal 206 is indicative for the signals transmitted by the remote devices 140 and, depending on whether the remote device is operated in TDD or FDX mode, simultaneously with signals 201. Signal 210 is indicative for the signal 206 as received by the receivers 111 of the access node 100 after being affected by the various cross-talk channels.

A first type of cross-talk that may appear in communication system 100 is far end cross-talk or FEXT. FEXT affecting the downstream signals 201 transmitted from the access node 100 to the subscribers 140, is referred to as downstream far end cross-talk or D-FEXT 202. Similarly, cross-talk affecting the upstream signals 206 transmitted from the subscribers 140 to the access node 100, i.e. upstream signals, is further referred to as upstream far end cross-talk or U-FEXT 207. Furthermore, as the access node 100 supports full duplex-communication, signals that are transmitted on one transmission line 112 will affect signals that are simultaneously received on another transmission line 112 at the same side of the transmission lines 112. This effect is further referred as near end cross-talk or NEXT. NEXT affecting the signals at the access node is further referred to as Operator-NEXT or O-NEXT 208. O-NEXT may be represented as being added (209) to the received signals. NEXT appearing as a reflection of a signal transmitted by the access node 100 on the same communication line is also referred to as ECHO 208. NEXT affecting the signals received at the remote devices 140 is further referred to a Remote-NEXT or R-NEXT 205. R-NEXT may be represented as being added (203) to the received signals. NEXT appearing as a reflection of a signal transmitted by a remote device is also referred to as echo.

For compensation of the US-FEXT and DS-FEXT and for cancellation of the O-NEXT, the access node 100 may comprise a vectoring processor 150. Vectoring processor 150 then pre-compensates the signals 201 transmitted by the access node 100 such that non-disturbed versions of the signals 204 are received by the remote devices 140. Such pre-compensation may be performed in the frequency domain by a precoding matrix comprising cross-talk pre-compensation coefficients. Vectoring processor 150 may further post-compensate the signals 210 received from the remote nodes 140 such that non-disturbed versions of the signals 206 are received by the access node 100. Such post-compensation may be performed in the frequency domain by a postcoding matrix comprising cross-talk post-compensation coefficients. Vectoring processor 150 may further perform cancellation for O-NEXT from signals 210 received by the access node 100 from the remote devices 140. Such O-NEXT cancellation may be performed in the frequency domain by an echo cancellation matrix comprising echo-cancellation coefficients, using knowledge of the communication signals that are transmitted by the access node 100. R-NEXT cannot be cancelled at the remote devices 140 because these devices to not have knowledge of the signals transmitted by the other remote devices 140. The effect of R-NEXT may be controlled by controlling the transmission power of the remote nodes. Echo into the transceivers may be performed within the same transceivers by subtracting from the received signal a scaled version of the transmitted signal.

To enable the above described cross-talk mitigation, the communication signals exchanged between the access node 100 and remote devices 140 over the respective communication lines are jointly coordinated within the communication system 100, i.e., transmission of the time domain symbols by both the access node 100 and remote devices 140 is coordinated in time such that characterization and mitigation of the cross-talk on each of those signals is possible. Control of this joint-coordination is performed by communication controller 151, i.e., communication controller may be configured to characterize cross-talk channels 202, 205, 207, 209 and to derive therefrom the cross-talk pre/post-compensation coefficients for vectoring processor 150, the transmission power settings for the transmitters of remote devices 140 and the echo scaling coefficients for performing echo cancelation in each of the transceivers 111, 141. Characterization of cross-talk channels may for example be performed by the communication controller 151 by estimating the cross-talk channels based on predetermined cross-talk probing sequences that are sent by the transmitters over the communication lines. By then measuring the received probing sequences, a cross-talk channel may be derived by correlating the measured probing sequences to the known transmitted probing sequences.

Communications by time domain symbols between the access node 101 and the remote devices 140 alternates between first time sub-frames and second time sub-frames within a certain time frame. Within the first time sub-frame a first configurable number of time domain symbols is exchanged in a joint-coordinated manner and within the second time sub-frame a second configurable number of time domain symbols is exchanged in a joint-coordinated manner. During the first time sub-frame, the upstream time domain symbols have a lower transmit signal power than during the second time sub-frame, e.g. by configuring the transmission power of the transmitters 141 in the remote devices 140 lower during the first time sub-frame than during the second time sub-frame. Therefore, the overall downstream communication rate will be higher during the first sub-frame than during the second sub-frame. Similarly, the overall upstream communication rate will be higher during the second sub-frame than during the first sub-frame. Furthermore, the number of symbols within a frame may be divided in a configurable fashion among this first and second time sub-frame. This way, a rate trade-off between upstream and downstream is obtained with fine granularity.

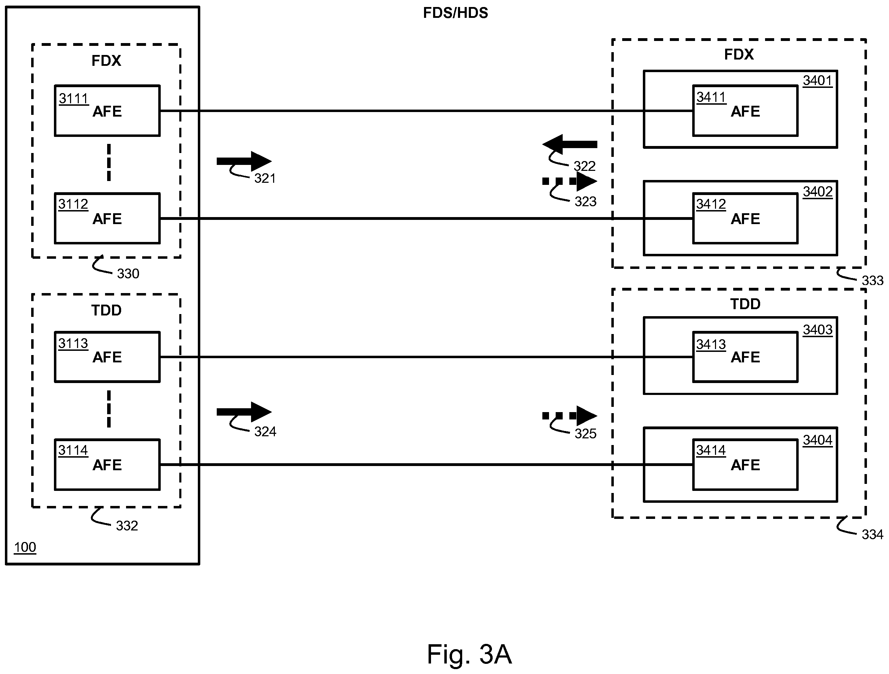

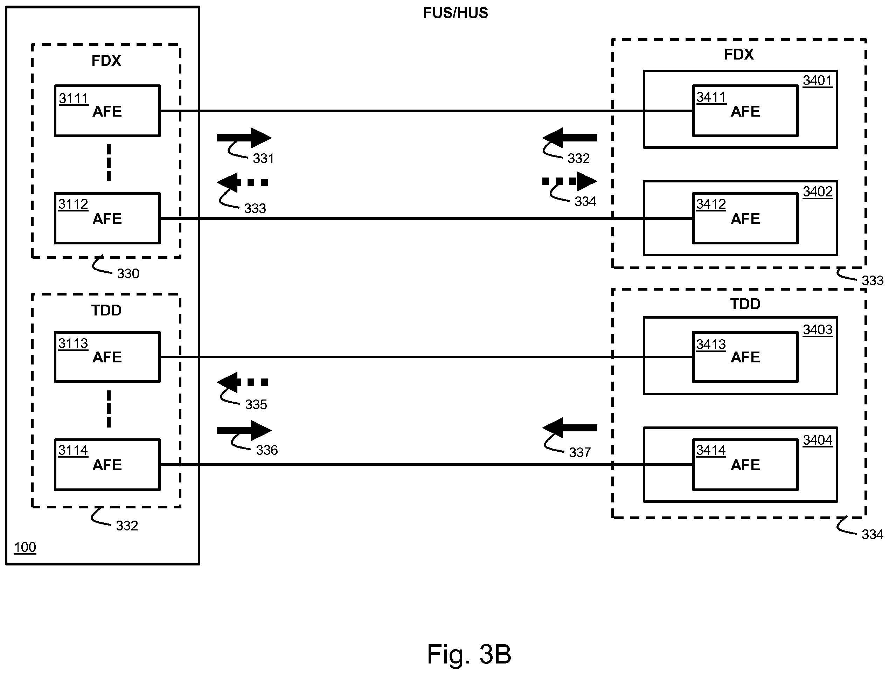

The communication lines 112 are further configurable into a time-division duplexing, TDD, mode or into a full duplex, FDX, mode. This is illustrated in Fig. 3A and Fig. 3B where an example configuration of communication system 101 is illustrated. A first group 333 of remote devices 3401, 3402 supports a full duplex operation mode, i.e., transceivers 3411, 3412 of the respective remote devices may operate according to a protocol supporting simultaneous upstream and downstream communication in both time and frequency. Correspondingly, a first group 330 of transceivers 3111, 3112 of access node 100 are configured for FDX communication with the FDX remote devices 333. A second group 334 of remote devices 3403, 3404 supports a time division duplexing, TDD, operation mode, i.e. transceivers 3413, 3414 of the respective remote devices may operate according to a protocol that does not support upstream and downstream communication at the same time within the same frequency band. Correspondingly, a second group 332 of FDX capable transceivers 3113, 3114 of access node 100 are configured for TDD communication with the TDD remote devices 3413, 3414.

FDX operated communications 330, 333 may operate in FDX mode during both the first and second time sub-frames, but downstream communication will be faster during the first sub-frame and upstream communication will be faster during the second sub-frame. For FDX operated connections, the first sub-frame may therefore be referred to as an FDX downstream-priority subframe, FDS, and the second sub-frame as an FDX upstream-priority subframe, FUS. FDX operated communications 330, 333 may also operate in FDX mode during the first or second time sub-frames and in TDD mode in the other time sub-frames. TDD operated connections 332, 334 only perform downstream communication during the first time sub-frame and only perform upstream communication during the second time sub-frame. For TDD operated connections, the first sub-frame may therefore be referred to as a TDD or half-duplex downstream sub-frame, HDS, and second sub-frame as a TDD or half-duplex upstream sub-frame, HUS.

Communication system 101 may for example correspond to a Digital Subscriber Line communication system. The TDD connections may then be operated according to the G.fast DSL protocol standard published as ITU-T G.9700 and G.9701. The FDX connections may then be operated according to an FDX DSL protocol such as for example currently proposed in the mgfast project of the ITU-T SG15.

Communication controller 151 is configured to control the joint-coordination of the communication signals exchanged in the mixed FDX-TDD communication system 101. To this purpose, communication controller 151 is configured to characterize the various cross-talk channels and to derive therefrom the corresponding precoding, postcoding and cancellation coefficients and transmit powers. Table 1 below lists the different types of cross-talk channels that may occur in the mixed FDX-TDD communication system 101. The columns represent the transmitters from which the cross-talk may originate, i.e., the transmitters 111 of the access node 100 represented by the letter 'O' operating either in FDX or TDD mode and transmitters 141 of the remote devices 140 represented by the letter 'R' operating either in FDX or TDD mode. The rows of table 1 represent the affected receivers, i.e., the receivers 111 of the access node 100 again represented by the letter 'O' and the receivers 141 of the remote nodes 140 represented by the letter 'R' operating either in FDX or TDD mode. The ECHO channels and direct gains 'D' are special cases as they may be represented on the diagonal lines of the respective NEXT and FEXT channel matrices. For a communication system 101 comprising N_{F} FDX remote devices 333 and N_{T} TDD remote devices 334, all channel matrices may be represented by a single (2N_{F}+2N_{T})×(2N_{F}+2N_{T}) channel matrix comprising all possible NEXT and FEXT cross-talk coefficients that may be estimated in communication system 101.

**Table 1: Cross-talk channel types in communication system 101**

| | | | **Transmitter** | | | |
|---|---|---|---|---|---|---|
| | | | **O** | | **R** | |
| | | | **FDX** | **TDD** | **FDX** | **TDD** |
| **Receiver** | **O** | **FDX** | **O-NEXT & ECHO** | **O-NEXT** | **U-FEXT & GAIN** | **U-FEXT** |
| | | **TDD** | **O-NEXT** | | **U-FEXT** | **U-FEXT & GAIN** |
| | **R** | **FDX** | **D-FEXT & GAIN** | **D-FEXT** | **R-NEXT & ECHO** | **R-NEXT** |
| | | **TDD** | **D-FEXT** | **D-FEXT & GAIN** | **R-NEXT** | |

Communication controller 151 may skip the estimation of the O-NEXT and R-NEXT channel among the TDD transceivers because NEXT is avoided by time division. For most of the remaining coefficients, phase and magnitude estimates may be used for an accurate cross-talk cancellation while for R-NEXT rough magnitude estimates may be sufficient since this channel estimation is only used for determination of the transmit power, i.e., for power control.

It has been observed that the impedance of the remote devices operating in TDD mode may change between upstream and downstream operation and, thus, between the first and second sub-frame. Especially at high frequencies as typically used in G.fast and G.mgfast DSL communication systems such a large impedance change on one communication line 112 may cause a significant change in the FEXT and NEXT experienced by the other lines. This is because, for example, part of the FEXT signal from a first communication line 112 to a second communication line 112 will contain a signal that leaks from the first communication line to a third communication line FEXT, that reflects at this third communication line and leaks from this third communication line into the second communication line by NEXT. An impedance change on the third communication line thus changes the reflection and, hence, affects the FEXT signal from the first communication line to the second communication line. As a consequence, in a mixed FDX TDD communication system 101, the cross-talk channels experienced by all communication lines during the first and second time subframes may be slightly different. Therefore, the rate and stability performance may be degraded if there is a mismatch between the state of the communication system 101 when the cross-talk channels are measured and the state of the communication system 101 when the measured channels are used for cross-talk mitigation.

As a solution, the cross-talk channels of Table 1 may be estimated separately for the first and second time sub-frame. Cross-talk compensation may then be performed alternatingly based on the so-derived cross-talk channels during the respective first and second time sub-frames. A problem with this approach is that the memory requirements of the communication controller 151 would double for storing the channel characteristics or the so-derived cross-talk compensation parameters.

According to an example embodiment, the communication controller 151 is configured to perform a common characterization of the cross-talk channels of Table 1 in an optimal manner, i.e., that may be used for determining a single set of crosstalk pre/post-compensation coefficients for use during both the first and second time sub-frames. The characterization of these cross-talk channels is performed such that: i) cross-talk channels that affect downstream performance are characterized based on measurements performed during the first sub-frame; and ii) cross-talk channels that affect upstream performance are characterized based on measurements performed during the second sub-frame. In other words, cross-talk channels into the receivers 111 of the access node 100 are measured during the second time sub-frame and cross-talk channels into the receivers 141 of the remote devices 140 are measured during first sub-frame.

Table 2 is similar to table 1 but only shows the cross-talk channels of Table 1 characterized by communication controller 151 during the first sub-frame. Fig. 3A further illustrates probing sequences 321, 322, 324 transmitted during this first sub-frame and probing sequences 323, 325 received and measured during this first sub-frame for characterization of the different cross-talk channels of Table 2.

**Table 2: Cross-talk channel types characterized by communication controller 150 during the first time sub-frame.**

| | | | **Transmitter** | | | |
|---|---|---|---|---|---|---|
| | | | **O** | | **R** | |
| | | | **FDX** | **TDD** | **FDX** | **TDD** |
| **Receiver** | **O** | **FDX** | | | | |
| | | **TDD** | | | | |
| | **R** | **FDX** | **D-FEXT & GAIN** | **D-FEXT** | **R-NEXT & ECHO** | |
| | | **TDD** | **D-FEXT** | **D-FEXT & GAIN** | **R-NEXT** | |

The downstream FEXT, D-FEXT, may be characterized by having both the FDX configured transceivers 330 and TDD configured transceivers 332 in the access node 100 transmit probing sequences 321, 324 on the communication lines, and by having both the FDX configured receivers 333 and TDD configured receivers 334 in the remote devices 3401-3404 to measure the received probing sequences 323, 325. These measurements are then provided to communication controller 151 for estimation of the FEXT channels and for deriving therefrom the precoding coefficients for use by the precoder 150 during both the first and second time sub-frame.

The R-NEXT from the FDX operated remote devices 333 into both the FDX and TDD operated remote devices 334 may also be measured during the first time sub-frame. To this end, the FDX operated remote devices 333 transmit probing sequences 322 during the first time sub-frame and both the FDX and TDD operated remote devices measure the received probing sequences 323, 325. The R-NEXT from the TDD operated remote devices 334 into the FDX operated remote devices is not measured during the first time sub-frame because the TDD remote devices 334 are in receive mode during the first time sub-frame and, hence, cannot transmit probing sequences.

Table 3 is similar to table 1 but only shows the cross-talk channels of Table 1 characterized by communication controller 151 during the second sub-frame. Fig. 3B further illustrates probing sequences 331, 332, 336, 337 transmitted during this second sub-frame and the reception 333, 334, 335 of these probing sequences for characterization of the different cross-talk channels of Table 3.

**Table 3: Cross-talk channel types characterized by communication controller 150 during the second time sub-frame.**

| | | | **Transmitter** | | | |
|---|---|---|---|---|---|---|
| | | | **O** | | **R** | |
| | | | **FDX** | **TDD** | **FDX** | **TDD** |
| **Receiver** | **O** | **FDX** | **O-NEXT & ECHO** | **O-NEXT** | **U-FEXT & GAIN** | **U-FEXT** |
| | | **TDD** | **O-NEXT** | | **U-FEXT** | **U-FEXT & GAIN** |
| | **R** | **FDX** | | | | **R-NEXT** |
| | | **TDD** | | | | |

The upstream FEXT, U-FEXT, may be characterized by having both the FDX configured transceivers 3411, 3412 and TDD configured transceivers 3413, 3414 in remote nodes 3401 to 3404 transmit probing sequences 332, 337 on the communication lines, and by having both the FDX configured receivers 3111, 3112 and TDD configured receivers 3113, 3114 in the access node 100 to measure the received probing signals 333, 335. These measurements are then provided to communication controller 151 for estimation of the U-FEXT channels and for deriving therefrom the postcoding coefficients for use by the postcoder 150 during both the first and second time sub-frame.

The O-NEXT from the FDX operated transmitters 3111, 3112 of access node 100 into the FDX operated receivers 3111, 3112 and into the TDD operated receivers 3113, 3114 may also be measured during the second time sub-frame. To this end, the FDX operated transmitters 3111, 3112 of access node 100 transmits probing signals 331 during the second time sub-frame while both the FDX operated receivers 3111, 3112 and the TDD operated receivers 3113, 3114 measure the received probing signals 333, 335. As the TDD operated transceivers 3113, 3114 of access node 100 are capable of FDX transmission, these transceivers may be used during the second upstream time sub-frame HUS to simultaneously transmit probing signals 336 while in upstream mode. As such, also the O-NEXT from the TDD operated transceivers 3113, 3114 into the FDX transceivers 3111, 3112 may be measured during the second time sub-frame by measuring the received probing signals 333. These measurements are then provided to the communication controller 151 for estimation of echo cancellation coefficients for cancellation of the NEXT into the access node 100.

During the second time sub-frame, the R-NEXT from the TDD operated remote transmitters 3413, 3414 into the FDX operated remote transceivers 3411, 3412 may be measured. To this end, the TDD operated remote transmitters 3413, 3414 transmit probing signals 337 which are measured by these FDX operated remote transceivers 3411, 3412. These measurements, together with the R-NEXT measurements performed during the first sub-frame are then provided to the communication controller 151. From these measurements, the communication controller 151 derives the transmission power levels for the transmitters in the remote devices. Although some the R-NEXT measurements are performed during the less optimal second time frame, the affecting changes in impedance between FUS and FDS are less relevant for R-NEXT since these measured channel characteristics are used for power controll only and therefore rougher estimates are sufficient.

In the above example embodiments, the communication controller 151 has been illustrated as part of access node 100. Alternatively, communication controller 151 may also be located outside access node 100 wherein access node 100 interoperates with communication controller 151. Communication controller may for example be located more upstream in the access network.

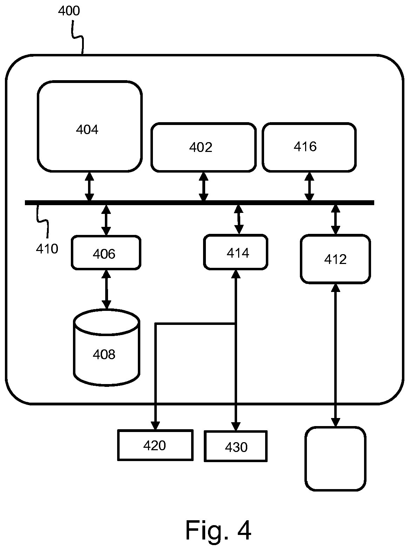

Fig. 4 shows a suitable computing system 400 enabling to implement embodiments of the above described steps, for example for performing the steps as performed by the communication controller 151. Computing system 400 may in general be formed as a suitable general-purpose computer and comprise a bus 410, a processor 402, a local memory 404, one or more optional input interfaces 414, one or more optional output interfaces 416, a communication interface 412, a storage element interface 406, and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator or user to input information to the computing device 400, such as a keyboard 420, a mouse 430, a pen, voice recognition and/or biometric mechanisms, a camera, etc. Output interface 416 may comprise one or more conventional mechanisms that output information to the operator or user, such as a display 440, etc. Communication interface 412 may comprise any transceiver-like mechanism such as for example one or more Ethernet interfaces that enables computing system 400 to communicate with other devices and/or systems. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage element(s) 408 above is/are described as a local disk, in general any other suitable computer-readable media such as a removable magnetic disk, optical storage media such as a CD or DVD, -ROM disk, solid state drives, flash memory cards, ... could be used. Computing system 400 could thus correspond to the communication controller 151 of Fig. 1.

As used in this application, the term "circuitry" may refer to one or more or all of the following:
(a) hardware-only circuit implementations such as implementations in only analogue and/or digital circuitry and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A communication controller (151, 400) configured to control joint-coordination of communication signals (201, 204, 206, 210) exchanged between an access node (100) and remote devices (140, 3401-3404) over respective communication lines (112); communications between the access node and the remote devices alternating between first time sub-frames and second time sub-frames;
the first time sub-frames corresponding to full-duplex, FDX, downstream-priority sub-frames or to time-division duplexing, TDD, downstream sub-frames, and the second time sub-frames corresponding to FDX upstream-priority sub-frames or to TDD upstream sub-frames,
further **characterized in that**:
the communication controller is further configured to characterize first cross-talk channels (202, 205) into receivers (3411-3414, 141) of the remote devices during the first time sub-frames and to characterize second cross-talk channels (207, 208) into receivers (111, 3111-3114) of the access node during the second time sub-frames,
and the communication controller is further configured to control the joint-coordination of the communication signals exchanged between the access node and the remote devices during the first or second time-sub-frames based on the so-characterized first and second crosstalk channels.

2. The communication controller (151, 400) according to claim 1 wherein the first cross-talk channels comprise downstream far end cross-talk, FEXT, channels (202); and wherein the communication controller is further configured to derive precoding coefficients from the characterized downstream FEXT channels for downstream FEXT pre-compensation of communication signals (201) to be transmitted by the access node to the remote devices.

3. The communication controller (151, 400) according to claim 1 or 2 wherein the second cross-talk channels comprise upstream far end cross-talk, FEXT, channels (207); and wherein the communication controller is further configured to derive postcoding coefficients from the characterized upstream FEXT channels for upstream FEXT post-compensation of communication signals (210) received by the access node.

4. The communication controller (151, 400) according to any one of claims 1 to 3 wherein the second cross-talk channels comprise near end cross-talk, NEXT, channels (208) into the receivers of the access node; and wherein the communication controller is further configured to derive cancellation coefficients from the so-characterized NEXT channels for cancelation of NEXT from communication signals (210) received by the receivers of the access node.

5. The communication controller (151, 400) according to claim 4 wherein the characterizing the near end cross-talk, NEXT, channels (208) into the receivers of the access node comprises configuring the access node to transmit probing sequences (336) onto communication lines operated in TDD mode (332) during the second time sub-frames.

6. The communication controller (151, 400) according to any one of claims 1 to 5 wherein the first cross-talk channels comprise near end cross-talk, NEXT, channels from remote devices (3401-3402) operating in FDX mode into the receivers of the remote devices (205); and wherein the communication controller is further configured to derive therefrom transmit power levels for transmitters (3411-3412) of the remote devices operating in FDX mode.

7. The communication controller (151, 400) according to any one of claims 1 to 6 further configured to characterize near end cross-talk, NEXT, channels from remote devices (3403, 3404) operating in TDD mode into the receivers of the remote devices (3401, 3402) operating in FDX mode (205) during the second time sub-frames, and to derive therefrom transmit power levels of transmitters (3413, 3414) of the remote devices operating in TDD mode.

8. The communication controller (151, 400) according to any one of the preceding claims wherein a remote device (140, 3403, 3404) operating in TDD mode provides a different impedance between the first and second time sub-frames.

9. The communication controller (151, 400) according to any one of the preceding claims further comprising at least one processor (402) and at least one memory (404) including computer program code, the at least one memory and computer program code configured to, with the at least one processor, cause the performance of the controller.

10. An access node (100) comprising at least one analog front end (111, 3111-3114) configured to transmit and receive communication signals exchanged with remote devices (3401-3404) over respective communication lines (120), and a signal processor (150) to jointly coordinate the transmitting and receiving of the communication signals, wherein the signal processor is configured by a communication controller (151, 400) according to any one of the preceding claims.

11. The access node (100) according to claim 10 further comprising the communication controller (151, 400) according to any one of the claims 1 to 9.

12. A method comprising:
- controlling joint-coordination of communication signals (201, 206) exchanged between an access node (100) and remote devices (140) over respective communication lines (112); communications between the access node and the remote devices alternating between first time sub-frames and second time sub-frames; the first and second time sub-frames respectively corresponding to Full-duplex Downstream-priority Sub-frames and Full-duplex Upstream-priority Sub-frames when a communication line is operated in full-duplex, FDX, mode (330, 333), and respectively corresponding to Downstream Sub-frames, , and Upstream Sub-frames, , when a communication line is operated in time division duplexing, TDD, mode (332, 334);
**characterized in that** the method further comprises:
- characterizing first cross-talk channels into receivers of the remote devices during the first time sub-frames;
- characterizing second cross-talk channels into receivers of the access node during the second time sub-frames,
- controlling the joint-coordination of the communication signals exchanged between the access node and the remote devices during the first or second time-sub-frames based on the so-characterized first and second crosstalk channels.

## Patentansprüche

1. Kommunikationssteuerung (151, 400), die dazu ausgelegt ist, eine gemeinsame Koordination von Kommunikationssignalen (201, 204, 206, 210), die über jeweilige Kommunikationsleitungen (112) zwischen einem Zugangsknoten (100) und entfernten Vorrichtungen (140, 3401-3404) ausgetauscht werden, zu steuern; wobei die Kommunikation zwischen den Zugangsknoten und den entfernten Vorrichtungen zwischen ersten Zeitunterframes und zweiten Zeitunterframes wechselt;
wobei die ersten Zeitunterframes Downstream-Vollduplex(FDX)-Prioritätsunterframes oder Downstream-Zeitduplexing(TDD)-Unterframes entsprechen und die zweiten Zeitunterframes Upstream-FDX-Prioritätsunterframes oder Upstream-TDD-Unterframes entsprechen,
ferner **dadurch gekennzeichnet, dass**:
die Kommunikationssteuerung ferner dazu ausgelegt ist, während der ersten Zeitunterframes erste Übersprechkanäle (202, 205) in Empfänger (3411-3414, 141) der entfernten Vorrichtungen zu charakterisieren und während der zweiten Zeitunterframes zweite Übersprechkanäle (207, 208) in Empfänger (111, 3111-3114) des Zugangsknotens zu charakterisieren,
und die Kommunikationssteuerung ferner dazu ausgelegt ist, die gemeinsame Koordination der Kommunikationssignale, die während der ersten oder der zweiten Zeitunterframes zwischen dem Zugangsknoten und den entfernten Vorrichtungen ausgetauscht werden, auf Basis der derart charakterisierten ersten und zweiten Übersprechkanäle zu steuern.

2. Kommunikationssteuerung (151, 400) nach Anspruch 1, wobei die ersten Übersprechkanäle Downstream-Fernübersprech(FEXT)-Kanäle (202) umfassen; und wobei die Kommunikationssteuerung ferner dazu ausgelegt ist, für eine Downstream-FEXT-Vorkompensation von Kommunikationssignalen (201), die vom Zugangsknoten zu den entfernten Vorrichtungen zu übertragen sind, Vorcodierungskoeffizienten aus den charakterisierten Downstream-FEXT-Kanälen abzuleiten.

3. Kommunikationssteuerung (151, 400) nach Anspruch 1 oder 2, wobei die zweiten Übersprechkanäle Upstream-Fernübersprech(FEXT)-Kanäle (207) umfassen; und wobei die Kommunikationssteuerung ferner dazu ausgelegt ist, für eine Upstream-FEXT-Nachkompensation von Kommunikationssignalen (210), die vom Zugangsknoten empfangen werden, Nachcodierungskoeffizienten aus den charakterisierten Upstream-FEXT-Kanälen abzuleiten.

4. Kommunikationssteuerung (151, 400) nach einem der Ansprüche 1 bis 3, wobei die zweiten Übersprechkanäle Nahübersprech(NEXT)-Kanäle (208) in die Empfänger des Zugangsknotens umfassen; und wobei die Kommunikationssteuerung ferner dazu ausgelegt ist, zum Abbruch von NEXT bei Kommunikationssignalen (210), die von den Empfängern des Zugangsknotens empfangen werden, Abbruchkoeffizienten aus den derart charakterisierten NEXT-Kanälen abzuleiten.

5. Kommunikationssteuerung (151, 400) nach Anspruch 4, wobei das Charakterisieren der Nahübersprech(NEXT)-Kanäle (208) in die Empfänger des Zugangsknotens das Auslegen des Zugangsknotens zum Übertragen von Sondierungssequenzen (336) auf Kommunikationsleitungen, die im TDD-Modus (332) betrieben werden, während der zweiten Zeitunterframes umfasst.

6. Kommunikationssteuerung (151, 400) nach einem der Ansprüche 1 bis 5, wobei die ersten Übersprechkanäle Nahübersprech(NEXT)-Kanäle von entfernten Vorrichtungen (3401-3402), die im FDX-Modus betrieben werden, in die Empfänger der entfernten Vorrichtungen (205) umfassen; und wobei die Kommunikationssteuerung ferner dazu ausgelegt ist, Sendeleistungsniveaus für Sender (3411-3412) der entfernten Vorrichtungen, die im FDX-Modus betrieben werden, daraus abzuleiten.

7. Kommunikationssteuerung (151, 400) nach einem der Ansprüche 1 bis 6, die ferner dazu ausgelegt ist, Nahübersprech(NEXT)-Kanäle von entfernten Vorrichtungen (3403, 3404), die im TDD-Modus betrieben werden, in die Empfänger der entfernten Vorrichtungen (3401, 3402), die im FDX-Modus (205) betrieben werden, während der zweiten Zeitunterframes zu charakterisieren, und Sendeleistungsniveaus von Sendern (3413, 3414) der entfernten Vorrichtungen, die im TDD-Modus betrieben werden, daraus abzuleiten.

8. Kommunikationssteuerung (151, 400) nach einem der vorhergehenden Ansprüche, wobei eine entfernte Vorrichtung (140, 3403, 3404), die im TDD-Modus betrieben wird, zwischen den ersten und den zweiten Zeitunterframes eine andere Impedanz bereitstellt.

9. Kommunikationssteuerung (151, 400) nach einem der vorhergehenden Ansprüche, die ferner mindestens einen Prozessor (402) und mindestens einen Speicher (404), der Computerprogrammcode beinhaltet, umfasst, wobei der mindestens eine Speicher und der Computerprogrammcode dazu ausgelegt sind, mit dem mindestens einen Prozessor die Ausführung der Steuerung zu bewirken.

10. Zugangsknoten (100), der mindestens ein analoges Frontend (111, 3111-3114), das dazu ausgelegt ist, Kommunikationssignale, die mit entfernten Vorrichtungen (3401-3404) über jeweilige Kommunikationsleitungen (120) ausgetauscht werden, zu übertragen und zu empfangen, und einen Signalprozessor (150) umfasst, um das Übertragen und Empfangen der Kommunikationssignale gemeinsam zu koordinieren, wobei der Signalprozessor von einer Kommunikationssteuerung (151, 400) nach einem der vorhergehenden Ansprüche ausgelegt ist.

11. Zugangsknoten (100) nach Anspruch 10, der ferner die Kommunikationssteuerung (151, 400) nach einem der Ansprüche 1 bis 9 umfasst.

12. Verfahren, das Folgendes umfasst:
- Steuern einer gemeinsamen Koordination von Kommunikationssignalen (201, 206), die über jeweilige Kommunikationsleitungen (112) zwischen einem Zugangsknoten (100) und entfernten Vorrichtungen (140) ausgetauscht werden; wobei die Kommunikation zwischen den Zugangsknoten und den entfernten Vorrichtungen zwischen ersten Zeitunterframes und zweiten Zeitunterframes wechselt; wobei die ersten und die zweiten Zeitunterframes jeweils Downstream-Vollduplex-Prioritätsunterframes bzw. Upstream-Vollduplex-Prioritätsunterframes entsprechen, wenn eine Kommunikationsleitung im Vollduplex(FDX)-Modus (330, 333) betrieben wird, und jeweils Downstreamunterframes bzw. Upstreamunterframes entsprechen, wenn eine Kommunikationsleitung im Zeitduplexing(TDD)-Modus (332, 334) betrieben wird;
**dadurch gekennzeichnet, dass** das Verfahren ferner Folgendes umfasst:
- Charakterisieren von ersten Übersprechkanälen in Empfänger der entfernten Vorrichtungen während der ersten Zeitunterframes;
- Charakterisieren von zweiten Übersprechkanälen in Empfänger des Zugangsknotens während der zweiten Zeitunterframes,
- Steuern der gemeinsamen Koordination der Kommunikationssignale, die während der ersten oder der zweiten Zeitunterframes zwischen dem Zugangsknoten und den entfernten Vorrichtungen ausgetauscht werden, auf Basis der derart charakterisierten ersten und zweiten Übersprechkanäle.

## Revendications

1. Dispositif de commande de communication (151, 400) configuré pour commander une coordination conjointe de signaux de communication (201, 204, 206, 210) échangés entre un nœud d'accès (100) et des dispositifs distants (140, 3401-3404) sur des lignes de communication respectives (112) ; les communications entre le nœud d'accès et les dispositifs distants alternant entre des premières sous-trames temporelles et des deuxièmes sous-trames temporelles ;
les premières sous-trames temporelles correspondant à des sous-trames de priorité aval en duplex intégral, FDX, ou à des sous-trames aval en duplexage par répartition dans le temps, TDD, et les deuxièmes sous-trames temporelles correspondant à des sous-trames de priorité amont FDX ou à des sous-trames amont TDD,
**caractérisé en outre en ce que** :
le dispositif de commande de communication est en outre configuré pour caractériser des premiers canaux de diaphonie (202, 205) dans des récepteurs (3411-3414, 141) des dispositifs distants pendant les premières sous-trames temporelles, et pour caractériser des deuxièmes canaux de diaphonie (207, 208) dans des récepteurs (111, 3111-3114) du nœud d'accès pendant les deuxièmes sous-trames temporelles,
et le dispositif de commande de communication est en outre configuré pour commander la coordination conjointe des signaux de communication échangés entre le nœud d'accès et les dispositifs distants pendant les premières ou deuxièmes sous-trames temporelles sur la base des premiers et deuxièmes canaux de diaphonie ainsi caractérisés.

2. Dispositif de commande de communication (151, 400) selon la revendication 1, dans lequel les premiers canaux de diaphonie comprennent des canaux aval (202) de diaphonie d'extrémité distante, FEXT ; et dans lequel le dispositif de commande de communication est en outre configuré pour dériver des coefficients de précodage à partir des canaux aval FEXT caractérisés pour une précompensation aval FEXT de signaux de communication (201) à transmettre par le nœud d'accès aux dispositifs distants.

3. Dispositif de commande de communication (151, 400) selon la revendication 1 ou 2, dans lequel les deuxièmes canaux de diaphonie comprennent des canaux amont (207) de diaphonie d'extrémité distante, FEXT ; et dans lequel le dispositif de commande de communication est en outre configuré pour dériver des coefficients de post-codage à partir des canaux amont FEXT caractérisés pour une post-compensation amont FEXT de signaux de communication (210) reçus par le nœud d'accès.

4. Dispositif de commande de communication (151, 400) selon l'une quelconque des revendications 1 à 3, dans lequel les deuxièmes canaux de diaphonie comprennent des canaux (208) de diaphonie d'extrémité proche, NEXT, dans les récepteurs du nœud d'accès ; et dans lequel le dispositif de commande de communication est en outre configuré pour dériver des coefficients d'annulation à partir des canaux NEXT ainsi caractérisés pour l'annulation des NEXT à partir de signaux de communication (210) reçus par les récepteurs du nœud d'accès.

5. Dispositif de commande de communication (151, 400) selon la revendication 4, dans lequel la caractérisation des canaux de diaphonie d'extrémité proche, NEXT, (208) dans les récepteurs du nœud d'accès comprend la configuration du nœud d'accès pour transmettre des séquences de sondage (336) sur des lignes de communication fonctionnant en mode TDD (332) pendant les deuxièmes sous-trames temporelles.

6. Dispositif de commande de communication (151, 400) selon l'une quelconque des revendications 1 à 5, dans lequel les premiers canaux de diaphonie comprennent des canaux de diaphonie d'extrémité proche, NEXT, à partir de dispositifs distants (3401-3402) fonctionnant en mode FDX dans les récepteurs des dispositifs distants (205) ; et dans lequel le dispositif de commande de communication est en outre configuré pour dériver à partir de ceux-ci des niveaux de puissance de transmission pour des émetteurs (3411-3412) des dispositifs distants fonctionnant en mode FDX.

7. Dispositif de commande de communication (151, 400) selon l'une quelconque des revendications 1 à 6, configuré en outre pour caractériser des canaux de diaphonie d'extrémité proche, NEXT, à partir de dispositifs distants (3403, 3404) fonctionnant en mode TDD dans les récepteurs des dispositifs distants (3401, 3402) fonctionnant en mode FDX (205) pendant les deuxièmes sous-trames temporelles, et pour dériver à partir de ceux-ci des niveaux de puissance de transmission d'émetteurs (3413, 3414) des dispositifs distants fonctionnant en mode TDD.

8. Dispositif de commande de communication (151, 400) selon l'une quelconque des revendications précédentes, dans lequel un dispositif (140, 3403, 3404) distant fonctionnant en mode TDD fournit une impédance différente entre les premières et deuxièmes sous-trames temporelles.

9. Dispositif de commande de communication (151, 400) selon l'une quelconque des revendications précédentes comprenant en outre au moins un processeur (402) et au moins une mémoire (404) comportant un code de programme informatique, la au moins une mémoire et le code de programme informatique étant configurés pour, avec le au moins un processeur, provoquer la performance du dispositif de commande.

10. Nœud d'accès (100) comprenant au moins un frontal analogique (111, 3111-3114) configuré pour transmettre et recevoir des signaux de communication échangés avec des dispositifs distants (3401-3404) sur des lignes de communication respectives (120), et un processeur de signaux (150) pour coordonner conjointement la transmission et la réception des signaux de communication, dans lequel le processeur de signaux est configuré par un dispositif de commande de communication (151, 400) selon l'une quelconque des revendications précédentes.

11. Nœud d'accès (100) selon la revendication 10, comprenant en outre le dispositif de commande de communication (151, 400) selon l'une quelconque des revendications 1 à 9.

12. Procédé comprenant les étapes consistant à :
- commander une coordination conjointe de signaux de communication (201, 206) échangés entre un nœud d'accès (100) et des dispositifs distants (140) sur des lignes de communication respectives (112) ; les communications entre le nœud d'accès et les dispositifs distants alternant entre des premières sous-trames temporelles et des deuxièmes sous-trames temporelles ; les premières et deuxièmes sous-trames temporelles correspondant respectivement à des sous-trames de priorité aval en duplex intégral et à des sous-trames de priorité amont en duplex intégral lorsqu'une ligne de communication fonctionne en mode de duplex intégral, FDX, (330, 333), et correspondant respectivement à des sous-trames aval et à des sous-trames amont lorsqu'une ligne de communication fonctionne en mode de duplexage par répartition dans le temps, TDD, (332, 334) ;
**caractérisé en ce que** le procédé comprend en outre les étapes consistant à :
- caractériser des premiers canaux de diaphonie dans des récepteurs des dispositifs distants pendant les premières sous-trames temporelles ;
- caractériser des deuxièmes canaux de diaphonie dans des récepteurs des nœud d'accès pendant les deuxièmes sous-trames temporelles,
- commander la coordination conjointe des signaux de communication échangés entre le nœud d'accès et les dispositifs distants pendant les premières ou deuxièmes sous-trames temporelles sur la base des premiers et deuxièmes canaux de diaphonie ainsi caractérisés.
